# EUROPEAN PATENT SPECIFICATION

(11) **EP 2 028 811 B1**
(45) Date of publication and mention of the grant of the patent: **18.05.2011**
(21) Application number: 07014467.0
(22) Date of filing: 24.07.2007
(51) Int. Cl.: H04L 29/06, H04W 4/00

(54) **Method for exchanging user information in a telecommunication network**
Verfahren zum Austauschen von Benutzerinformation in einem Telekommunikationsnetzwerk
Procédé pour l'échange d'informations utilisateur dans un réseau de télécommunications

(43) Date of publication of application: 25.02.2009
(73) Proprietor: T-Mobile International AG, 53227 Bonn (DE)
(72) Inventor: Britsch, Matthias, 53639 Königswinter (DE)
(74) Representative: Riebling, Peter

(56) References cited:
- WO-A-2005/020619
- US-A1- 2003 204 608
- US-A1- 2007 055 874

## Description

### Field of the Invention

The invention relates to a method for access control for a client by exchanging user information in a telecommunication network. In particular the invention relates to a method for access control for a client which works across different access protocols and entities.

### Description of the Prior Art

Today there exist many communication protocols and architectures for transferring or conveying information. The most important communication protocols are Hypertext Transfer Protocol (HTTP), Session Initiation Protocol (SIP) and Simple Mail Transfer Protocol (SMTP). Generally, these communication protocols are based on the well known client-server system.

Either of these communication protocols include mechanisms to allow or restrict an access of the client to certain resources on the server side. For example, protocol specific or generic authentication procedures are used for access control.

Currently there is no mechanism available which allows a reuse of information exchanged in one protocol via another.

Also there is no generic mechanism available which allows correlating access to certain resources and information stored about these transactions, in case there is used more than one protocol to exchange information.

An example may be a user (client) which dials into a telephone conference using SIP. After having the conference established, the user intends to use a service offered by the operator of the conferencing service which enables him to see the details of the conference with his http based internet web browser. In addition to an authentication to the telephone conference system using the SIP protocol the user needs to additionally authenticate to the http based web server. Today there is no standardised way to reuse the authentication from the SIP access to the conference server for the http based web server. There is as well no generic way for the web server to identify the user's transactions on the conference server in order to retrieve the according information.

US 2003/204608 A1 discloses a method for registering a client with a service entity by exchanging information between a control entity of an access network accessible by a user client and the service entity which is directly or indirectly connected to the access network. The method comprises the steps of transmitting the user information from the client to the control entity of the access network in order to register with the access network, checking in the control entity the user information versus a user profile stored at the control entity, generating a global identifier assigned to the client, storing the global identifier in the control entity, transmitting the global identifier to the service entity, and using the global identifier to register the client with the service entity

Similar methods are disclosed in WO 2005/020619 A and US 2007/055874 A1.

### Disclosure of the Invention

It is the object of the present invention to provide a method for access control for a client to service entities by exchanging information between entities of at least one communication system using different communication protocols.

This object is achieved by providing a method as described in the independent claim.

Other features which are considered to be characteristic for the invention are set forth in the dependent claims.

The method according to the invention comprises the steps of: transmitting user information from the user client to a control entity of the access network in order to register with the access network, checking in the control entity the user information versus a user profile stored at the control entity, generating a global identifier assigned to the client, storing the global identifier in the control entity, transmitting the global identifier to the service entity, and using the global identifier to register the client with the service entity.

According to the present invention it is possible to exchange user information via different access protocols and to identify and reuse the user information for other access channels and authentication procedures.

By conveying the information to application servers, they are able to identify sessions of a user and respond to requests for session details.

### Session correlation framework

Today's and next generation telecommunication services are posing a number of requirements with regards to providing an internet-like user experience while making the service still fitting into a telecommunication operator's processes.
The most important are:
a) In order not to rely on a specific client type or the integrity of a mobile device, control has to remain on the network side. This requirement comes down to the fact that the network needs to correlate the data provided to the client and it's granularity with the policies included in the subscriber's profile.
b) In order to allow free selection of modules from the market and create a best of breed network environment, the architecture has to show the modularity necessary to deploy already existing and newly introduced building blocks, rather than to deliver a set of functions in a monolithic way.
c) Security requirements are forcing to deploy mechanisms which allow tracking the access of users to data and status information of other users and the assignment of users' policies to their data.

These requirements can be tackled by the mechanism according to the present invention that allows correlating clients' action regardless of the used protocol to their user profile and each other. The user profile will specify the type and granularity of data to which the user has access.

### Brief Description of the Drawings

- Figure 1: shows an overview over a subscriber profile specific network service access according to the invention.
- Figure 2: shows an example for a detailed message sequence for a subscriber profile specific network service access.

- Figure 3: shows an example for a detailed message sequence for a subscriber access using a non-ICS client.

### Description of Preferred Embodiments of the Invention

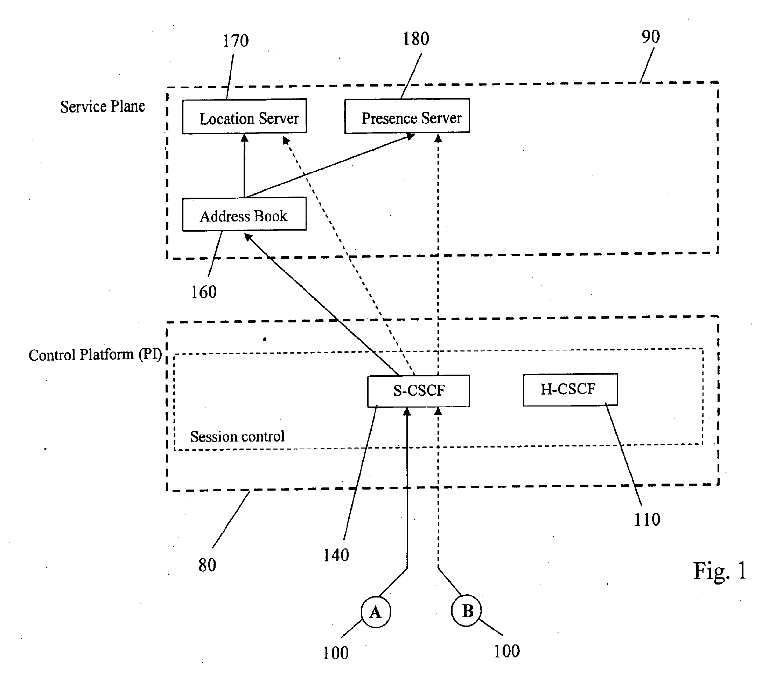

Figure 1 schematically depicts the mechanism according to the present invention that allows correlating clients' action regardless of the used protocol to their user profile and each other. The user profile will specify the type and granularity of data to which the user has access. In the given example, two users have to distinct policies in their user profile. For example, a first user A is which registers in a control entity, e.g. S-CSCF 140, of an access network not entitled to receiving presence and location information delivered by a location server 170 or a presence server 180 as a single data element but only in the context of an address book server 160. For this user A, it is not possible to run a 3rd party client on his terminal device and still make use of information coming from the network operator (e.g. status of B-party, access network information and the like).
A second user B is allowed to access and consequently subscribe to location and presence information delivered by the location server 170 and presence server 180. User B could run a 3rd party application on his terminal device which makes use of the before mentioned data.

The mechanism described in connection with Figure 1 requires for checking access of subscribers to network services, a mechanism which is already possible by using standard IMS functionality. Yet, there is no such mechanism defined for access protocols other than SIP.
The aim of the control platform is to describe a generic mechanism which is working across all access protocols.

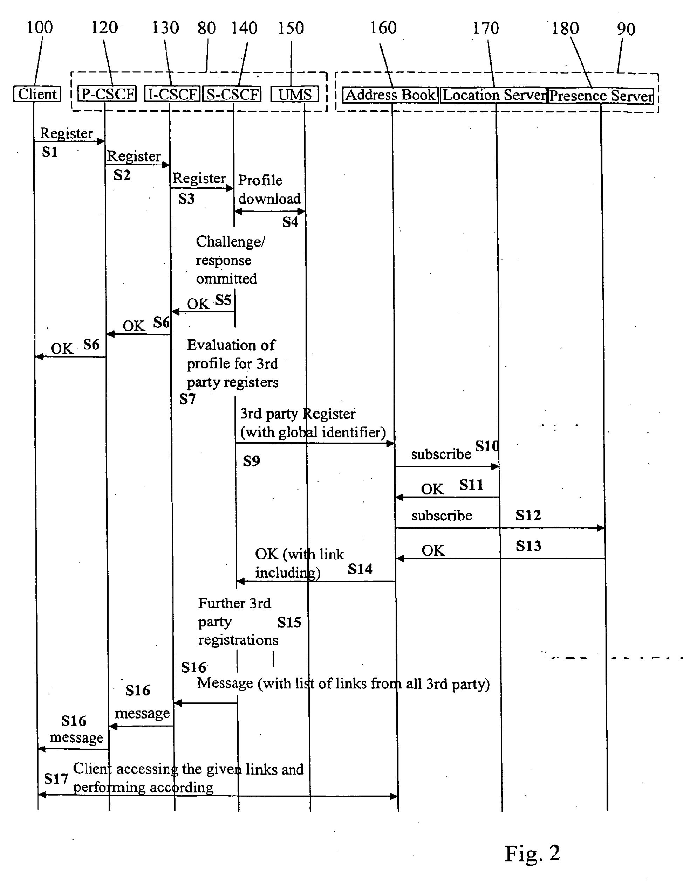

Figure 2 shows a detailed sequence for subscriber profile specific networks service access according to the invention.

The invention is described for example in connection with an IP Multimedia Subsystem (IMS) as a standard for next generation networks which is based on the Session Initiation Protocol (SIP). IMS consists of a number of proxies and a registrar for SIP messages. The registrar is connected to a database which stores all information necessary to process a subscriber session in his subscriber profile.

The Call State Control Function (CSCF) in Figure 2 is basically a SIP Proxy. The CSCF is part of a control entity which may also include a User Mobility Server 150 (UMS). The CSCF can work in different functions as proxy CSCF 120 (P-CSCF), as interrogating CSCF 130 (I-CSCF) or as serving CSCF 140 (S-CSCF). Thus it acts as gateway between an IP Multimedia subsystem (IMS) and an access network, for example S-UMTS, T-UMTS, GPRS, as entry point of a home network and also as SIP registrar. In future the main emphasis lays on the S-CSCF functionalities which comprise the service execution of some services and the service control of all executed services within the IMS. The CSCF interrogates the HSS (the UMS part) in order to download the user profile.

The User Mobility Server 150 (UMS) is a database that contains an identifier for the system where a mobile station is currently registered (or the last known system where the mobile station was registered). The UMS 150 is part of the Home Subscriber Server (HSS). It stores related information for the users such as User Service Profile and User Mobility information. UMS might also generate, store and/or manage security data and policies (e.g. IETF features). Moreover, it should provide logical name to transport address translation in order to provide answer to DNS queries. It basically interacts with the CSCF providing the latter with all the appropriate information for the location of the user and for his service profile.
The message sequence according to Figure 2 may include the following steps.

S1) a client 100 sends a SIP register message to the P-CSCF 120.
S2) the P-CSCF 120 forwards the message to the I-CSCF 130.
S3) I-CSCF 130 forwards the message to the S-CSCF 140.
S4) S-CSCF 140 retrieves the subscribers profile from the UMS 150 and performs a challenge response mechanism (401 reject, new register with challenge response expected from the client).
S5) the S-CSCF 140 checks for positive challenge response match, if match is positive, S-CSCF generates a global identifier for the client and stores it on the UMS 150. Subsequently a 200 OK message including the global identifier is send to the client 100.
S6) Message 200 OK is send along the path.
S7) S-CSCF 140 starts to evaluate the subscribers profile and checks for necessary 3rd party registration actions to be performed, in the given example: a party registration is send to an address book server 160 being part of a service entity.
S8) 3rd party registration message including the global identifier is send from S-CSCF 140 to the address book server 160
S9) Address book server 160 stores the global identifier and creates a local identifier, which is used to identify the subscribers account and/or transactions on the address book server 160. Subsequently it checks the service specific subscriber profile and detects that location and presence information are needed in order to serve the subscriber.
S10) The address book server 160 sends subscribe messages to a location server 170.
S11) Location server 170 responds with OK, as servers are assumed to be trusted party anyway.
S12) The address book server 160 sends subscribe messages to the presence server 180.
S13) Presence server 180 responds with OK, as servers are assumed to be trusted party anyway.
S14) Address book server 160 responds with OK to the S-CSCF 140 and includes a URL which will be used by the client 100.
S15) The S-CSCF 140 waits for all 3rd party registration cycles to be finalised.
S16) The S-CSCF 140 sends a message with all URLs to application servers which will be used by the client 100 in the current registration period.
S17) The client 100 starts to work through the URL list and performs the related download and update actions.

For clients 100 which comprise specific logic, it is expected that all functions are running automatically. In specific, the client 100 would use the URLs provided for further requests on known servers and included the global ID in further attempts to access servers without registration (that can be the case e.g. for portal applications).

In case the client has not implemented the full Internet Connection Sharing (ICS) feature set or only parts of it, e.g. the subscriber is using a SIP client, the ICS client's automated functions need manual interaction with the user.

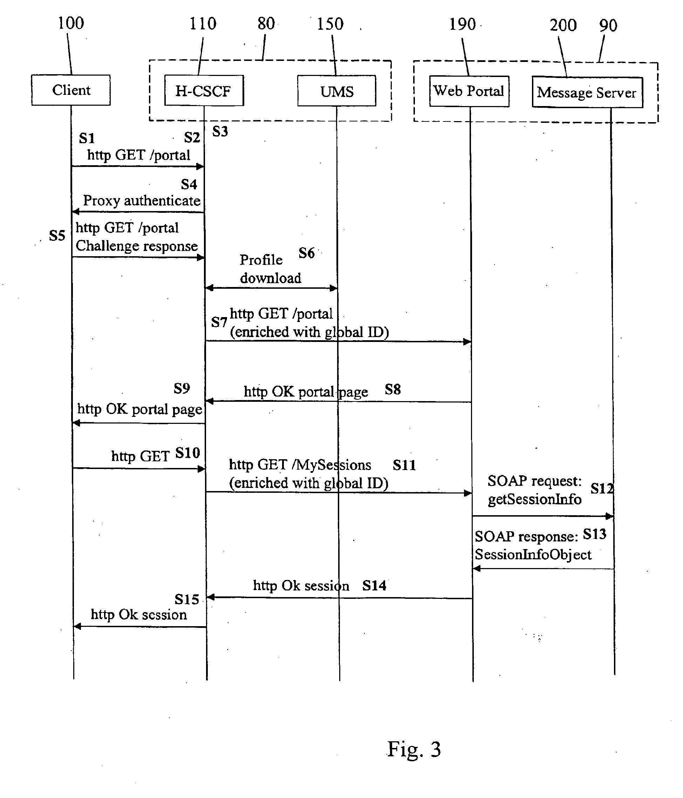

Figure 3 shows a detailed sequence for subscriber access with non-ICS client (standard web browser).
S1) A subscriber (client 100) sends an http GET message to the network, which is routed to the control platform by the DNS resolution.
S2) The http message is routed to the H-CSCF 110.
S3) H-CSCF 110 checks for the subscriber profile based on the IP address of the client 100 and finds that the number is not assigned in the current network.
S4) H-CSCF 110 then sends an authentication request to the client 100 (proxy authenticate).
S5) The Client 110 responds to the challenge.
S6) H-CSCF checks the challenge response, finds a positive match and includes the global identifier (Please note: in case the user has already registered, e.g. via SIP, the global identifier from the SIP session will be assigned, as is assumed for the rest of the sequence).
S7) The message is forwarded to a web portal 190.
S8) The web portal 190 responds with an HTML page.
S9) The client 100 hits a link pointing to information about his running messaging sessions (which are assumed to run on a different device or the server to show information of previously terminated Sessions).
S10) The client 100 sends an http GET to the H-CSCF 110.
S11) H-CSCF 110 forwards the message to the web portal 190.
S12) The web portal 190 creates a SOAP request to the messaging server 200 in order to retrieve the user's session object.
S13) Messaging server 200 responds with the session object.
S14) Web portal 190 creates a response to the H-CSCF
S15 the H-CSCF sends the html page to the client 100.

Global and local identifiers
(1) All access protocol authentication mechanisms can be maintained as specified in the according protocol. This refers in specific to http digest, early IMS authentication and digest AKA as used in IMS.
(2) The first activity of the client when using a specific access channel is to authenticate, this can either be done by the client automatically or be enforced by the network based on standard mechanisms. In case the client uses an access network which is under control of the server operator, checking might be done on basis of the IP address.
(3) All references are of the format <command>.<global pointer>.<local pointer>
   (a) Command: describes the action for which the identifier shall be used for, e.g. update, download, etc. The command is optional and might not be used in case standard of the shelf clients are used, such as standard html browsers.
   (b) Global identifier is created by the control platform and used by control platform and application servers. Application servers use it e.g. for general requests to other servers about subscriber information (e.g. ongoing sessions etc), the control platform uses it to authorise access.
   (c) Local identifiers are created and consumed only by the application servers.
      They are used to allow the client access to a certain resource or to identify certain information send by the client (e.g. presence status changes).
(4) Upon registration the network generates the reference ID which is passed back to the client and to be used as a global identifier on all further requests, regardless of the transport protocol (SIP, http, SMTP/POP/IMAP) or the function called in case the client incorporates specific logic. In case the client does not incorporate specific logic, a suited network node will store the identifier together with a session identifier and insert it into further requests. All requests have to be routed through that network node. It will store the assigned reference ID for validating future requests of the clients, the application servers will validate client requests against the local reference assigned to the client's resources.
(5) In case the client incorporates specific logic, it can be used for updating client side information. In this case all application servers wishing to make use of that mechanism are required to generate a reference ID upon registration which identifies the resources to be updated and pass it back in the response to the authentication.
(6) The mechanism can be used to trigger predefined actions on the client, e.g. subscription to certain presence information, using a certain reference which is part of the trigger in case the client incorporates certain logic.
(7) Each server platform shall expose all session objects existing in it's domain for remote requests. The request key will be one or more identifiers.
(8) Interworking between application servers is assumed to be done based on identifiers. Each application server participating in the exchange of information is required to implement an interface which allows requesting a particular client's session information (SessionObject) by using the global or local reference as request key.

### List of References and Abbreviations

- 80: Control Entity
- 90: Service Entity
- 100: Client
- 110: Home Call Session Control Function (H-CSCF)
- 120: Proxy Call Session Control Function (P-CSCF)
- 130: Interrogating Call Session Control Function (I-CSCF)
- 140: Serving Call Session Control Function (S-CSCF)
- 150: User Mobility Server (UMS)
- 160: Address Book Server
- 170: Location Server
- 180: Presence Server
- 190: Web Portal
- 200: Message Server

- HSS: Home Subscriber Server

## Claims

1. Method for access control for a client by exchanging information between a control entity (80) of an access network accessible by a user client (100) and a service entity (90) which is directly or indirectly connected to the access network, the method comprising the steps of:
transmitting the user information from the client (100) to the control entity (80) of the access network in order to register with the access network, checking in the control entity (80) the user information versus a user profile stored at the control entity,
generating a global identifier assigned to the client (100),
storing the global identifier in the control entity (80),
transmitting the global identifier to the service entity (90), and
using the global identifier to register the client (100) with the service entity (90), **characterized in**
**that** the service entity (90) stores the global identifier and generates a local identifier which is used to identify an account and/or a transaction on the service entity (90), wherein a reference identifier is provided which includes the global identifier and the local identifier, wherein the reference identifier further includes a command which describes an action the identifier shall be used for.

2. Method according to claim 1, wherein the Session Initiation Protocol SIP is used for communication in the access network.

3. Method according to claim 1, wherein a communication protocol other than SIP is used for communication with the service entity (90).

4. Method according to claim 1, wherein the user information includes registration information.

5. Method according to claim 1, wherein the global identifier generated in the control entity is transmitted to the client (100).

6. Method according to claim 1, wherein the control entity comprises a Call Session Control Function CSCF and a User Mobility Server UMS (150).

7. Data processing software program comprising a program code which performs a method according to the claims 1-6 when it is executed on a suitable data processing system.

8. Data processing program product comprising a program code which is executable on a data processing system for performing a method according to claims 1-6.

## Patentansprüche

1. Verfahren zur Zugriffssteuerung für einen Client durch Informationsaustausch zwischen einer Steuerentität (80) eines Zugriffsnetzwerks, auf das von einem Benutzer-Client (100) zugegriffen werden kann, und einer Dienstentität (90), die direkt oder indirekt mit dem Zugriffsnetzwerk verbunden ist, wobei das Verfahren die folgenden Schritte umfasst:
Übertragen der Benutzerinformationen von dem Client (100) an die Steuerentität (80) des Zugriffsnetzwerks zum Registrieren beim Zugriffsnetzwerk,
Prüfen der Benutzerinformationen in der Steuerentität (80) anhand eines in der Steuerentität gespeicherten Benutzerprofils,
Erzeugen einer globalen Kennung, die dem Client (100) zugewiesen ist,
Speichern der globalen Kennung in der Steuerentität (80),
Übertragen der globalen Kennung an die Dienstentität (90), und
Verwenden der globalen Kennung zum Registrieren des Clients (100) bei der Dienstentität (90), **dadurch gekennzeichnet, dass**
die Dienstentität (90) die globale Kennung speichert und eine lokale Kennung erzeugt, die zum Identifizieren eines Accounts und/oder einer Transaktion auf der Dienstentität (90) verwendet wird, wobei eine Referenzkennung vorgesehen ist, welche die globale Kennung und die lokale Kennung enthält, wobei die Referenzkennung ferner einen Befehl enthält, der eine Aktion beschreibt, für welche die Kennung zu verwenden ist.

2. Verfahren nach Anspruch 1, wobei das Session Initiation Protocol SIP zur Kommunikation in dem Zugriffsnetzwerk verwendet wird.

3. Verfahren nach Anspruch 1, wobei ein Kommunikationsprotokoll, das nicht das Session Initiation Protocol SIP ist, zur Kommunikation mit der Dienstentität (90) verwendet wird.

4. Verfahren nach Anspruch 1, wobei die Benutzerinformationen Registrierungsinformationen enthalten.

5. Verfahren nach Anspruch 1, wobei die in der Steuerentität erzeugte globale Kennung zum Client (100) übertragen wird.

6. Verfahren nach Anspruch 1, wobei die Steuerentität eine Call Session Control Function CSCF und einen Benutzer-Mobilitäts-Server (User Mobility Server) UMS (150) umfasst.

7. Datenverarbeitungs-Softwareprogramm, umfassend einen Programmcode, der ein Verfahren nach den Ansprüchen 1 bis 6 durchführt, wenn er auf einem geeigneten Datenverarbeitungssystem ausgeführt wird.

8. Datenverarbeitungs-Programmprodukt, das einen Programmcode umfasst, der auf einem Datenverarbeitungssystem ausführbar ist, um ein Verfahren nach den Ansprüchen 1 bis 6 durchzuführen.

## Revendications

1. Procédé de contrôle d'accès pour un client par l'échange d'informations entre une entité de contrôle (80) d'un réseau d'accès accessible à un client utilisateur (100), et une entité de service (90) qui est reliée directement ou indirectement au réseau d'accès, le procédé comprenant les étapes qui consistent :
à transmettre les informations d'utilisateur du client (100) vers l'entité de contrôle (80) du réseau d'accès en vue d'un enregistrement auprès du réseau d'accès,
à vérifier dans l'entité de contrôle (80) les informations d'utilisateur par rapport à un profilé d'utilisateur mis en mémoire dans ladite unité de contrôle,
à générer un identifiant global attribué au client (100),
à mettre en mémoire l'identifiant global dans l'entité de contrôle (80),
à transmettre l'identifiant global à l'entité de service (90) et
à utiliser l'identifiant global pour enregistrer le client (100) auprès de l'entité de service (90),
**caractérisé en ce que** l'entité de service (90) met en mémoire l'identifiant global et génère un identifiant local qui est utilisé pour identifier un compte et/ou une transaction sur l'entité de service (90), étant précisé qu'il est prévu un identifiant de référence qui contient l'identifiant global et l'identifiant local, et que l'identifiant de référence contient par ailleurs une instruction qui décrit une action pour laquelle l'identifiant doit être utilisé.

2. Procédé selon la revendication 1, étant précisé que le protocole d'ouverture de session SIP est utilisé pour la communication dans le réseau d'accès.

3. Procédé selon la revendication 1, étant précisé qu'un protocole de communication autre que le SIP est utilisé pour la communication avec l'entité de service (90).

4. Procédé selon la revendication 1, étant précisé que les informations d'utilisateur contiennent des informations d'enregistrement.

5. Procédé selon la revendication 1, étant précisé que l'identifiant global généré dans l'unité de contrôle est transmis au client (100).

6. Procédé selon la revendication 1, étant précisé que l'entité de contrôle comprend une fonction de contrôle de session d'appel CSCF et un serveur de mobilité d'utilisateur UMS (150).

7. Programme de logiciel de traitement de données comprenant un code de programme qui met en oeuvre un procédé selon les revendications 1 à 6 quand il est exécuté sur un système de traitement de données adapté.

8. Produit de programme de traitement de données comprenant un code de programme qui est apte à être exécuté sur un système de traitement de données pour mettre en oeuvre un procédé selon les revendications 1 à 6.
